# EUROPEAN PATENT SPECIFICATION

(11) **EP 2 004 327 B1**
(45) Date of publication and mention of the grant of the patent: **10.11.2010**
(21) Application number: 07733576.8
(22) Date of filing: 26.03.2007
(51) Int. Cl.: B01J 31/22, B22F 1/00, B22F 9/24

(54) **PROCESS FOR PRODUCING METAL NANOPARTICLES AND PROCESS FOR PRODUCING ACETYLIDES PROCESS**
VERDAHREN ZUR HERSTELLUNG VON METALLNANOPARTIKELN UND VERFAHRENN ZUR HERSTELLUNG VON ACETYLIDEN
PROCEDE DE PRODUCTION DE NANOPARTICULES METALLIQUES ET PROCEDE DE PRODUCTION D'ACETYLURES

(30) Priority: 24.03.2006 GB 0605880
(43) Date of publication of application: 24.12.2008
(73) Proprietor: Johnson Matthey Public Limited Company, London EC1N 8EE (GB)
(72) Inventor: BISHOP, Peter, Trenton, Reading Berkshire RG4 9LS (GB); BOARDMAN, Alan, Reading Berkshire RG4 8PY (GB); BUCHE, Virginie, Reading Berkshire RG4 6LR (GB)
(74) Representative: Whitcombe, Nicole Jane
(86) International application number: PCT/GB2007/050153
(87) International publication number: WO 2007/110665

(56) References cited:
- WO-A-2004/011178
- CHECHIK VICTOR ET AL: "Monolayers of thiol-terminated dendrimers on the surface of planar and colloidal gold" LANGMUIR; LANGMUIR 1999 ACS, WASHINGTON, DC, USA, vol. 15, no. 19, 1999, pages 6364-6369, XP002442850
- VICKERS MATTHEW S ET AL: "Dithiocarbamate ligand stabilised gold nanoparticles" J. MATER. CHEM.; JOURNAL OF MATERIALS CHEMISTRY 2006, vol. 16, no. 2, 2006, pages 209-215, XP002442851
- COATES GE ET AL: "Gold(I) Alkynyls and their co-ordination complexes" JOURNAL OF THE CHEMICAL SOCIETY, CHEMICAL SOCIETY, LONDON, GB, 1962, pages 3220-3226, XP009086456 ISSN: 0368-1769 cited in the application

## Description

The present invention relates to a process for producing metal nanoparticles, the metal colloid solution obtained as an intermediate in said process and the high metal content stabilised metal nanoparticles obtained as the final product of said process. Additionally, the present invention relates to a process for making a metal acetylide suitable for use in the above process for producing metal nanoparticles.

Metal nanoparticles have many different applications in areas such as decoration, catalysis, optoelectronics and biotechnology. Various techniques are known for their formation, including chemical reduction of metal salts and electrochemical methods. Metal salts previously used in the production of metal nanoparticles have included chloroauric acid (Aslam et al., J. Mat. Chem., 2004, 14, 1795 and Osterloh et al., Chem. Mat., 2004, 16 (13) 276), silver acetate (Nakamoto et al., Kagaku Kogyo, 2004, 55(12) 943 and Osterloh et al., Chem. Mat., 2004, 16 (13) 276) and silver nitrate (Nakamoto et al., Shikizai Kyokaishi, 2005, 78(5) 221).

Stabilisers, such as ligands, polymers and surfactants are often used in an effort to reduce nanoparticle agglomeration. One example of the use of ligands to stabilise the surface of nanoparticles is gold nanoparticles stabilised with thiols, as formed by the Brust method (Brust et al., J. Chem. Soc. Commun., 1994, p. 801). More recently stabilised nanoparticles have been made using long chain alkylamines in place of thiols in various methods including a one-pot aqueous synthesis (Aslam et al., J. Mat. Chem., 2004, 14, 1795) and a two-phase aqueous/organic synthesis in the presence of NaBH₄ (Leff et al., Langmuir, 1996, 12, 4723). The former method results in nanoparticles of greater than or equal to 9 nm in diameter, whilst the latter method has been shown to result in gold chloride ions being present at the surface of the nanoparticles (Kumar et al. Langmuir, 2003, 19, 6277).

We have discovered a new process that uses metal salts and amines to make high metal content stabilised metal nanoparticles. This process does not use sulphur containing precursors and therefore does not lead to the generation of sulphurous gases during application of the nanoparticles. Unlike most methods that do not use sulphur containing precursors our method produces a stable metal colloid solution as an intermediate of the process allowing the solution to be stored for long periods of time, e.g. several months, and/or transported away from the site of manufacture to a different site for application, if necessary. Additionally, this process does not use halide containing precursors and therefore does not produce insoluble products. We have found that halides are restrictive to producing a wide range of derivatised amine nanoparticles due to insolubility problems, most likely resulting from side reactions causing decomposition to insoluble metallic products.

According to one aspect, the invention provides a process for making high metal content stabilised metal nanoparticles, which process comprising reacting at least one metal acetylide with at least one amine or amine salt in the presence of a first solvent under reducing conditions to yield a metal colloid solution and then recovering metal nanoparticles as a precipitate by either:
(a) evaporating the first solvent; or
(b) adding a second solvent to the first solvent.
The use of metal acetylides according to the above process results in near quantitative yields of stable derivatised amine nanoparticles with different types of amines.

Herein the term "high metal content" means that the metal content of the metal nanoparticles is greater than or equal to 65 wt%, for example 75 wt%.

Commonly the at least one metal acetylide is reduced by carrying out the reaction between the at least one metal acetylide and the at least one amine at a temperature at a temperature of from 70 °C to 200 °C. Alternatively, the at least one metal acetylide can be reduced using a chemical reductant, by cathodic reduction or by exposure to electromagnetic radiation, e.g. UV or visible light.

As described above, the process requires the use of at least one amine or amine salt, although in some embodiments mixtures of different amines may be used. The at least one amine can be a simple amine, a polyamine, an aromatic amine, a surfactant amine (including surfactant amino acids) or a functionalised amine. Herein the term simple amine means a compound consisting of a carbon chain with a single amine substituent, either a mid-chain N-alkyl or NH group or a terminal NH₂ group; the term polyamine means a compound consisting of a carbon chain with multiple amine substituents, mid-chain N-alkyl or NH groups and/or terminal NH₂ groups; the term aromatic amine means a compound consisting of an aromatic group with at least one amine substituent; the term surfactant amine means a surface-active amine; whilst the term functionalised amine means an amine containing another functionality, other than an amine.

Suitable simple amines include oleylamine, hexylamine, octylamine, nonylamine, decylamine, dodecylamine, dimethyl dodecylamine tridecylamine, di(allyl)amine, propylamine, ethylamine, triethylamine, nonylamine, octadecylamine, hexadecylamine and polyoxyalkylene amines, such as Jeffamines (available from Huntsman Chemical Co.). Suitable polyamines include 2-hydroxyethyl ethylene diamine, hexamethylene diamine, decyl dipropylene triamine, triethylene tetramine, tetraethylene triamine, tetraethylene pentamine and pentaethylene tetramine. Suitable aromatic amines include xylylene diamine (preferably meta- and para- xylylene diamine), functionalise anilines such as 4,4'-methylene bis(2,6-diethylaniline) and 4-hexoylaniline, and functionalised pip[erazines such as aminoethyl piperazine and 1,4- bis(3 -aminopropyl) piperazine. Suitable surfactant amines include cocoamine, strearylamine, stearamido propyl dimethylamine, tallow amine, tallow propylene diamine, tallow dipropylene triamine, N-oleyl-1,3-diamino propane, N-(tallow alkyl)-1,3-propane diamine, oleamido-propyl dimethylamine, aminodecanoic acids, fatty amino acids and fatty acid hydrazides. Suitable functionalised amines include tyramine, dimethyl aminopropyl methacrylamide, dimethyl aminoethyl methacrylate, dimethyl aminopropyl acrylamide, 3-(2-aminoethylamino) propyl trimethoxy silane, 3-phenyl propylamine, 2,4,8,10-tetraoxaspiro (5,5) undecane-3,9-dipropanamine, 2-amino-2-methyl-1-propanol, olelyl imidazoline and 2-(2-aminoethylamino) ethanol. The grouping of amines into simple amines, polyamines, surfactant amines or functionalised amines should not be viewed as strict since some amines could be considered to be members of multiple groups, e.g. oleyl imidazoline which is a functionalised surfactant amine.

The at least one amine salt can be a salt of any of the simple amines, polyamines, aromatic amine, surfactant amines or functionalised amines listed above.

The process described above uses at least one metal acetylide. The at least one metal in the at least one metal acetylide can be selected from the platinum group metals and the coinage metals. Herein the platinum group metals comprise the metals ruthenium, rhodium, palladium, osmium, iridium and platinum, whilst coinage metals comprise the metals silver, gold and copper. Commonly the at least one metal acetylide used in the present invention will comprise one or more of silver, gold and copper.

The inventors have found that the copper compounds are oxygen or air sensitive, therefore when the process involves the use of at least one copper acetylide the present invention should carried out under an inert atmosphere. Reactions not involving the use of at least one copper acetylide may be carried out in air.

The at least one acetylide group in the at least one metal acetylide used in the process of the invention can be selected from phenylacetylides, alkynyl cyclohexanols, alkynes and alkynols.

In one embodiment of the invention the first solvent comprises a substantially non water-miscible solvent, for example one or more selected from the group consisting of xylene, Shellsol (a C9 aromatic hydrocarbon mixture available from Shell chemicals), toluene, mesitylene, cyclohexanone, cyclohexanol, dimethylacetamide and dimethylformamide. Alternatively the at least one amine may act as the first solvent for the reaction. If used, the second solvent may comprise a solvent with slight organic character, for example one or more selected from the group consisting of methanol, ethanol, iso-propanol, acetonitrile and acetone. Alternatively the second solvent may comprise acetonitrile or a short-to-medium chain hydrocarbon solvent such as hexane.

According to another aspect of the invention, a metal colloid solution may be obtained as an intermediate in the process described above. Such a solution may absorb UV light in the wavelength range of from 510 to 540 nm for gold containing solutions, from 395 to 425 nm for silver containing solutions and from 555 to 585 nm for copper containing solutions.

One advantage of this intermediate metal colloid solution is that it can remain stable for a period of 3 months or more, e.g. 6 months in storage. Another advantage is that the intermediate metal colloid solution is concentrated, typically containing from 5% to 70% metal by weight. Both of these properties mean that the intermediate may readily be transported thereby enabling production of high metal content stabilised metal nanoparticles as and when needed, either at the same site or at a different site from where the metal colloid solution was produced.

Another aspect of the invention embodies the high metal content stabilised metal nanoparticles obtained by the process of the present invention. The nanoparticles can range in diameter from 2 to 10 nm, commonly from 2 to 6 nm. The nanoparticles appear to be stabilised by multiple stabilisers; amines appear to be the major stabilisers but alkyl chains (herein the term "alkyl chains" is used to encompass alkane, alkene and alkyne based chains), alkoxy groups, carbonyl groups and aryl groups also appear to help stabilise the nanoparticles.

Another part of this invention relates to a process for making a metal acetylide suitable for use as in the above disclosed process. Methods for preparing gold phenylacetylide have been reported previously (Irwin et al., Organomet., 15, p. 51, 1996 and Coates et al., J. Chem. Soc., p. 3220, 1962), however these methods are disadvantageous due to the need to use toxic or dangerous materials (e.g. sulphur dioxide or volatile organic solvents) and the limited solubility and/or stability of the intermediates formed in the reaction mixture thereby resulting in impurities being present in the low yield final product.

Thus according to another aspect, the invention provides a process for making a gold phenylacetlyide, which process comprising reacting an aqueous solution of at least one gold salt with at least one reducing agent in the presence of water to form a gold intermediate and then reacting the intermediate with a phenylacetylene in the presence of at least one alcohol and a de-protonating agent. One advantage of this process is that it may be carried out at ambient temperature; another advantage is that it offers a fast route to a pure product.

The reducing agent used may comprise a substituted alkyl sulphide or a hydroxylamine salt, whilst the at least one gold salt can be a halide or ammonium gold salt, optionally chloroauric acid.

In order that the invention may be more fully understood the following Examples are provided by way of illustration only and with reference to the accompanying figure, in which:

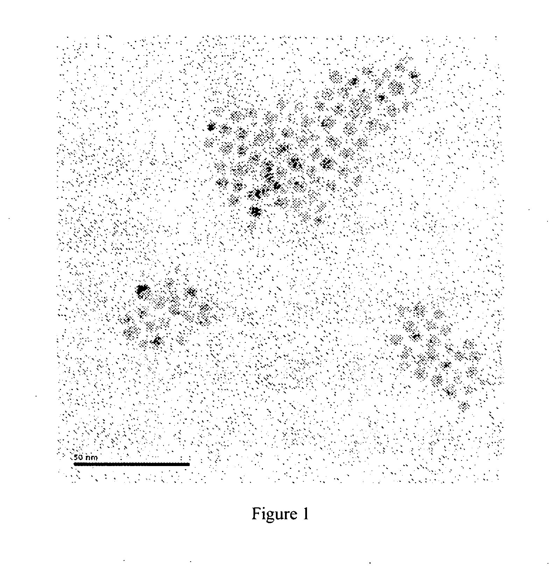

Figure 1 is a TEM image of copper nanoparticles, produced according to Example 22.

### EXAMPLE 1

### Preparation of Gold Phenylacetylide

160 ml of ethanol and 80 ml of water were added to 40 g (0.083 moles) of aqueous chloroauric acid solution (approx. 41% gold by weight), followed by 18 g (0.147 moles) of ethyl 2-hydroxyethyl sulphide in 40 ml of ethanol. The resulting dark orange solution was stirred and lightened to lemon yellow then colourless after less than five minutes. 9.2 g (0.090 moles) of phenylacetylene in 15 ml of ethanol was added to the solution, followed by 40 g (0.458 moles) of sodium acetate dissolved in 120 ml of water and 60 ml of ethanol. A dense yellow precipitate formed towards the end of the acetate addition. This precipitate was stirred at room temperature for one hour, collected by vacuum filtration then washed with 500 ml of water and 200 ml of methanol before being air-dried to produce a dry, lemon yellow coloured product in quantitative yield. Elemental analysis showed the product contained 64.5% gold (c.f. 66.0% theoretical).

The surface of the gold phenylacetylide discoloured slightly over time, but was still suitable for colloid synthesis after three weeks of storage in the dark.

### EXAMPLE 2

### Preparation of Gold 1-Hexyne

20 ml ethanol and 10 ml water were added to 4.50 g (0.009 moles) of aqueous chloroauric acid solution (approx. 41% gold by weight), followed by dropwise addition of 2.25 g (0.018 moles) of ethyl 2-hydroxyethyl sulphide in 5 ml ethanol. The resulting yellow solution was stirred and lightened to colourless over five minutes. 0.84 g (0.010 moles) of 1-hexyne in 4 ml of ethanol was added to the solution, followed by 4.44 g (0.054 moles) of sodium acetate dissolved in 15 ml of water a few minutes later. A white precipitate started to precipitate out of the solution, which was left to stir at room temperature for 20 minutes then vacuum filtered. The resulting precipitate was washed with 50 ml of water and 20 ml of ethanol before being air-dried to produce a white-cream coloured solid in quantitative yield.

### EXAMPLE 3

### Preparation of Silver Phenylacetylide

(Based on a method described in Davis et al., J. Am. Chem. Soc., 78, p. 1675, 1956.) 130 ml of methanol and 340 ml of water were added to 17.0 g (0.100 moles) of silver nitrate. 10 ml of 35% strength ammonia solution was added dropwise with stirring to form a brown precipitate that then dissolved to yield a clear, colourless solution. The reaction vessel was cooled in ice and 10.2 g (0.100 moles) of phenylacetylene in 50 ml of methanol added producing a voluminous white precipitate. This precipitate was stirred at room temperature for one hour (250 ml of additional methanol was used to keep the precipitate mobile), collected by vacuum filtration then washed with 400 ml of water and 2 x 50 ml of methanol before being air-dried in the dark to produce a dry, white product in quantitative yield. Elemental analysis showed the product contained 50.4% silver (c.f. 51.6% theoretical).

The surface of the silver phenylacetylide suffered only negligible surface discolouration and was suitable for colloid synthesis after three weeks of storage in the dark.

### EXAMPLE 4

### Preparation of Silver 1-Ethynyl Cyclohexanol

34 g (0.200 moles) of silver nitrate was dissolved in 480 ml of water and 240 ml of methanol with stirring, with the minimum amount of concentrated ammonia added dropwise to precipitate and dissolve the silver oxide formed. The resultant clear and colourless ammonical silver nitrate solution was treated with 25 g (0.183 moles) of 1-ethynl cyclohexanol in 100 ml of methanol to form a dense white precipitate. 200 ml of methanol and 150 ml of water were added to the solution to keep the precipitate mobile. After 1 hour of stirring the precipitate was vacuum filtered and washed with at least 1.5 litres of water and then 300 ml of methanol. The white solid was air-dried to a crumbly white solid in quantitative yield.

### EXAMPLE 5

### Preparation of Silver 3-Methyl-1-Octyn-3-ol

6.5 g (0.038 moles) of silver nitrate was dissolved in 120 ml of water and 60 ml of methanol, with the minimum amount of concentrated ammonia added dropwise to precipitate and dissolve the silver oxide formed. 7.5 g (0.060 moles) of 3-methyl-1-octyn-3-ol was then added in 200 ml of methanol to produce a mobile but heavy white precipitate. The resultant mixture was stirred for 30 minutes. On filtration, the precipitate was washed with water and then methanol to leave 10 g of a free-flowing white solid.

### EXAMPLE 6

### Preparation of Silver 1-Dodecyne

10.0 g (0.059 moles) of silver nitrate was dissolved in 200 ml of water and 100 ml of methanol, with the minimum amount of concentrated ammonia added dropwise to precipitate and dissolve the silver oxide formed. 10.0 g (0.059 moles) of 1-dodecyne in 100 ml of methanol was then added slowly to the solution to produce a white precipitate. The resultant mixture was stirred for 30 minutes. The supernatant was removed and 200 ml of methanol added, then the mixture was stirred for another 30 minutes. On filtration, the precipitate was washed with water and then methanol before being air-dried in the dark to yield 5.1 g of a white solid.

### EXAMPLE 7

### Preparation of Silver 1-Octyne

10.5 g (0.062 moles) of silver nitrate was dissolved in 200 ml of water and 100 ml of methanol, with the minimum amount of concentrated ammonia added dropwise to precipitate and dissolve the silver oxide formed. 7.0 g (0.032 moles) of 1-dodecyne in 100 ml of methanol was then added dropwise to the solution to produce a white precipitate. The resultant mixture was stirred for 1 hour. On filtration, the precipitate was washed with water before being air-dried in air in the dark to yield 9.3 g of a white solid.

### EXAMPLE 8

### Preparation of Copper 1-Hexyne

10.0 g (0.06 moles) of copper sulphate was dissolved in 200 ml of water and the resultant solution stirred with nitrogen bubbling through the solution for 15 minutes. Using a syringe, 10.3 ml (0.12 moles) of hydroxylamine (50wt% in water) was added to the solution, at which point the blue colour of the solution lightened. 5.15 g (0.06 moles) of 1-hexyne in 200 ml of methanol was then added to the solution, which was stirred for 30 minutes. On filtration, the precipitate was washed with water and then methanol before being air-dried to yield 7.2 g of a colourless solid.

### EXAMPLE 9

### Reaction of Gold Phenylacetylide with Oleylamine

20.0 g of gold phenylacetylide was dissolved in 80 ml of oleylamine at room temperature with stirring. 50 ml of Shellsol was added to form an opaque, orange solution which became clear and rose coloured on slight warming. Upon heating to 120 °C a brilliant red colloid formed. The colloid was allowed to cool and poured into 450 ml of methanol to produce a black powder that was allowed to settle. The pale reddish blue excess liquid was decanted away and the black powder washed with additional methanol (3 x 40 ml) by decantation. The wet powder was air-dried to a waxy black solid. Re-dissolution of the waxy solid in the minimum amount of Shellsol was followed by precipitation from 200 ml methanol to produce a dry, flowable brown powder in quantitative yield.

### EXAMPLE 10

### Reaction of Gold Phenylacetylide with Tridecylamine

The same process was carried out as in Example 9, except that the tridecylamine produced a deep orange / red coloured colloid that was not stable to prolonged refluxing, but was stable at room temperature.

### EXAMPLE 11

### Reaction of Gold Phenylacetylide with Tallow Dipropylene Triamine

2.2 g of gold phenylacetylide was dissolved in 25 ml of xylene and 20 ml of tallow propylene triamine. The solution was a clear pale red in colour when heated to 40 °C, but when refluxed at 160 °C it formed a stable more intensely red colloid. 80 ml of methanol was added to the cooled colloid to form a black precipitate. The excess solvent was then decanted off and the nanoparticles washed with additional methanol (2 x 30 ml) and air-dried to produce a dry, flowable brown powder in quantitative yield.

### EXAMPLE 12

### Reaction of Gold Phenylacetylide with 1-Alkylamines

The following process was carried out using 1-dodecylamine, 1-decylamine, 1-nonylamine and 1-octylamine as the 1-alkylamine.

5.0 g of gold phenylacetylide was stirred in approx. 45 ml of xylene for 2 minutes to disperse the gold compound evenly, 35 ml of 1-alkylamine was then poured in rapidly and the yellow phenylacetylide turned white forking an amine complex before rapidly dissolving to give a colourless solution. The solution was filtered to remove the few remaining gold particles and then heated turning ginger-brown above 35 °C, darker brown by 70 °C, very dark brown to black by 80 °C, black by 100C, black with a strong red tinge by 110 °C, and brilliant red upon standing at 110 °C or heating to 120 °C for a few minutes. Nanoparticles were deposited by addition of the cooled colloid to 200 ml methanol. Once settled, the nanoparticles were washed with additional methanol (2 x 10 ml) by decantation and air-dried to quantitative yield of a dry, flowable brown powder.

All of the nanoparticles produced were highly stable. The stability of the red colloidal solutions at room temperature increases with increasing molecular weight of the amine.

### EXAMPLE 13

### Reaction of Gold Phenylacetylide with Cocoamine Acetate

0.5 g of gold phenylacetylide, 4.0 g of cocoamine acetate and 30 ml of toluene were stirred together to form a yellow-orange solution. As the solution was heated it underwent colour changes: clear pale orange at 40 °C, clear dark brown at 60 °C, opaque dark brown at 80 °C and opaque dark brown with a red tinge at 100 °C. Xylene (20 ml) was added dropwise to increase the boiling point of the solution, which led to the formation of a brilliant red colloidal solution at temperatures between 110 °C and 140 °C.

The nanoparticles in this reaction were isolated by methanol precipitation, following the same method as used in Example 11 to produce a dry brown-black powder in quantitative yield.

### EXAMPLE 14

### Reaction of Gold Phenylacetylide with meta-Xylylene Diamine

1.0 g of gold phenylacetylide was slowly added to 10 ml of meta-xylylenediamine and 30 ml of dimethylacetamide at 60 °C, and rapidly dissolved to form a dull red solution that on heating to 80 °C reddened in colour. Nanoparticles were successfully isolated by room temperature methanol precipitation from the colloid to produce a dry golden- brown metallic powder in quantitative yield.

### EXAMPLE 15

### Reaction of Gold 1-Hexyne with n-Hexylamine

0.2 g of gold 1-hexyne, 10 drops of n-hexylamine and 1 ml of toluene were stirred together and heated gently to form a brown-red colloid at 105 °C that remained stable on cooling.

### EXAMPLE 16

### Reactions of Silver Phenylacetylide with Tetraethylene Pentamine

1.0 g of silver phenylacetylide, 7 ml of xylene and 7 ml of tetraethylene pentamine were stirred together to form a straw coloured solution. As the solution was heated it underwent colour changes: clear pale orange at 75 °C and clear bright orange at 100 °C. Nanoparticles were successfully isolated by room temperature methanol precipitation from the colloid to produce a dry brown-black powder in quantitative yield.

### EXAMPLE 17

### Reaction of Silver Phenylacetylide with Tallow Propylene Diamine Dioleate

3.0 g of silver phenylacetylide, 20.0 g of tallow propylene diamine dioleate paste and 30 ml of mesitylene were warmed together to solubilise the silver precursor. The solution was then heated to 160 °C to form a very stable concentrated orange colloid (that initially appeared at approx. 120 °C). The cooled orange solution was then treated with 80 ml of methanol to form brown nanoparticles that were isolated by decantation and air-dried to yield quantitative of dry, flowable brown powder.

### EXAMPLE 18

### Reaction of Silver 1-Ethynyl Cyclohexanol with Oleylamine

3.5g of silver ethynyl cyclohexanol was dissolved in 50 ml of oleylamine and 50 ml of xylene with slight warming to form a straw coloured solution, which became bright orange by 100 °C. The colloid was allowed to cool and slowly added to 200 ml of stirred methanol to produce a brown powder that was allowed to settle. On standing for a few hours the excess liquid was decanted away and the black powder was re-precipitated using additional xylene and methanol, then allowed to air-dry to a black waxy solid.

### EXAMPLE 19

### Reaction of Silver 3-Methyl-1-octyn-3-ol with Oleylamine

The same process was carried out as in Example 18, except that the 1-ethynyl cyclohexanol was replaced with 3-methyl-1-decyn-3-ol.

### EXAMPLE 20

### Reaction of Silver 1-Dodecyne with n-Hexylamine

3.55 g of silver 1-dodecyne, 25 ml of n-hexylamine and 20 ml of xylene were stirred together and heated gently to form a brown-red colloid at 105 °C that remained stable on cooling.

### EXAMPLE 21

### Reaction of Silver 1-Octyne with n-Hexylamine

The same process was carried out as in Example 20, except that the 3.55 g of silver 1-dodecyne was replaced with 3.00 g of silver 1-octyne.

### EXAMPLE 22

### Reaction of Copper 1-Hexyne with Oleylamine

1.00 g of copper 1-hexyne was dissolved in 30 ml of oleylamine, and the reaction mixture was degassed and purged for 15 minutes before being heated under nitrogen. Upon heating the reaction mixture formed a yellow coloured solution, which became a red colloid by 180 °C. The colloid was stirred for 30 minutes at 180 °C then allowed to cool, before being slowly added to 100 ml of methanol then being kept in an ice bath for 30 minutes. The nanoparticles were collected by filtration, washed with methanol then air-dried to produce 0.49 g of a dark coloured solid. (See Figure 1 for a TEM image of the nanoparticles produced, which have an diameter of approximately 5 nm).

### CHN and Elemental Analysis Results:

| Nanoparticle sample | gold - tallow dipropylene triamine | gold-oleylamine |
|---|---|---|
| Form | brown powder | sticky brown solid |
| Gold Precursor Used | gold phenylacetylide, 10 g | gold phenylacetylide, 10 g |
| Other Reagents | 60 ml tallow dipropylene triamine, 35 ml Shellsol | 50 ml oleylamine, 40 ml Shellsol |
| C % | 12.57 | 13.88 |
| H % | 2.08 | 1.99 |
| N % | 1.68 | 1.01 |
| Au % | 74.5-75 | 74.5-75 |

### Gravimetric (STA) Analysis Results:

| Nanoparticle sample | Gold-dodecylamine | Gold-decylamine | Gold-nonylamine | Gold-tallow dipropylene-triamine |
|---|---|---|---|---|
| Start of weight loss | 135 °C | 134 °C | 126 °C | 154 °C |
| End of first peak | 350 °C, 91.0 wt% | 350 °C 94.8 wt% | Not seen | 377 °C 90.5 wt% |
| End of second peak | 550 °C 87.0 wt% | 580 °C 92.6 wt% | Not seen | 572 °C 81.7 wt% |
| Final bum out | 570 °C, 86.3 wt% | 588 °C 92.6 wt% | Approx. 600 °C 94.3 wt% | 570 °C 77.8 wt% |

## Claims

1. A process for making high metal content stabilised metal nanoparticles, which process comprising reacting at least one metal acetylide with at least one amine or amine salt in the presence of a first solvent under reducing conditions to yield a metal colloid solution and then recovering metal nanoparticles as a precipitate by either:
(a) evaporating the first solvent; or
(b) adding a second solvent to the first solvent,
Wherein the metal content of the metal nanoparticles is greater than or equal to 65wt%.

2. A process for making a metal colloid solution, which process comprises reaching at least one metal acetylide with at least one amine or amine salt in the presence of a solvent under reducing conditions to yield the metal colloid solution.

3. A process according to claim 1 or claim 2, wherein the at least one metal acetylide is reduced by carrying out the reaction between the at least one metal acetylide and the at least one amine at a temperature of from 70 °C to 200 °C.

4. A process according to claim 1 or claim 2, wherein the at least one metal acetylide is reduced using a chemical reductant.

5. A process according to claim 1 or claim 2, wherein the at least one metal acetylide is reduced by exposure to electromagnetic radiation.

6. A process according to any one of the preceding claims, wherein the at least one amine is a simple amine, a polyamine, an aromatic amine, a surfactant amine or a functionalised amine.

7. A process according to claim 6, wherein the simple amine is selected from the group consisting of oleylamine, hexylamine, octylamine, nonylamine, decylamine, dodecylamine, dimethyl dodecylamine tridecylamine, di(allyl)amine, propylamine, ethylamine, triethylamine, nonylamine, octadecylamine, hexadecylamine and polyoxyalkylene amines.

8. A process according to claim 6, wherein the polyamine is selected from the group consisting of 2-hydroxyethyl ethylene diamine, hexamethylene diamine, decyl dipropylene triamine, triethylene tetramine, tetraethylene triamine, tetraethylene pentamine and pentaethylene tetramine.

9. A process according to claim 6, wherein the aromatic amine is selected from the group consisting of xylylene diamine, 4,4'-methylene bis(2,6-diethylaniline), 4-hexoylaniline, aminoethyl piperazine and 1,4- bis(3-aminopropyl) piperazine.

10. A process according to claim 6, wherein the surfactant amine is selected from the group consisting of cocoamine, stearylamine, stearamido propyl dimethylamine, tallow amine, tallow propylene diamine, tallow dipropylene triamine, N-oleyl-1,3-diaminopropane, N-(tallow alkyl)-1,3-propane diamine, oleamido propyl dimethylamine, aminodecanoic acids, fatty amino acids and fatty acid hydrazides.

11. A process according to claim 6, wherein the functionalised amine is selected from the group consisting of tyramine, dimethyl aminopropyl methacrylamide, dimethyl aminoethyl methacrylate, dimethyl aminopropyl acrylamide, 3-(2-aminoethylamino) propyl trimethoxy silane, 3-phenyl propylamine, 2,4,8,10-tetraoxaspiro (5,5) undecane-3,9-dipropanamine, 2-amino-2-methyl-1-propanol, olelyl imidazoline and 2-(2-aminoethylamino)ethanol.

12. A process according to any one of claims 1 to 6, wherein the amine salt is selected from the salts of any of the amines in claims 7 to 11.

13. A process according to any one of the preceding claims, wherein the at least one metal in the at least one metal acetylide is selected from the platinum group metals or the coinage metals.

14. A process according to claim 13, wherein the at least one metal is silver or gold and the process is carried out in air.

15. A process according to claim 13, wherein the at least one metal is copper and the process is carried out under an inert atmosphere.

16. A process according to any one of the preceding claims, wherein the at least one metal acetylide is selected from the group consisting of metal phenylacetylides, metal alkynyl cyclohexanols, metal alkynes or metal alkynols.

17. A process according to any one of the preceding claims, wherein the first solvent as defined in claim 1 or the solvent as defined in claim 2 is selected from the group consisting of xylene, Shellsol, toluene, mesitylene, cyclohexanone, cyclohexanol, dimethylacetamide and dimethylformamide.

18. A process according to any one of claims 1 or 3 to 17, wherein the second solvent is selected from the group consisting of methanol, ethanol, iso-propanol, acetone, acetonitrile and hexane.

19. A process according to any one of the preceding claims, wherein the metal colloid solution absorbs UV-visible light in the wavelength range of from 510 to 540 nm, from 395 to 425 nm or from 555 to 585 nm.

20. A process according to any one of the preceding claims, wherein the metal colloid solution remains stable for a period of at least 3 months.

21. A process according to any one of the preceding claims, wherein the metal colloid solution comprises from 5% to 70% metal by weight.

22. A process according to any one of claims 1 or 3 to 21, wherein the nanoparticles have a diameter of from 2 to 10 nm.

23. A process according to claim 22, wherein the diameter is from 2 to 6nm.

24. A process according to any one of the preceding claims, wherein the process does not use sulphur precursors or halide containing precursors.

25. A metal colloid solution comprising at least one acetylide and at least one amine or salt thereof as stabilisers.

26. A metal colloid solution according to claim 25, wherein the metal is selected from the platinum group metals or the coinage metals.

27. A metal colloid solution according to claim 25 or claim 26, wherein the metal is selected from silver, gold or copper.

28. A metal colloid solution according to any one of claims 25 to 27, wherein the solution is selected from the group consisting of xylene, Shellsol, toluene, mesitylene, cyclohexanone, cyclohexanol, dimethylacetamide and dimethylformamide.

29. A metal colloid solution according to any one of claims 25 to 28, wherein the at least one acetylide is derived from the group consisting of metal phenylacetylides, metal alkynyl cyclohexanols, metal alkynes and metal alkynols.

30. A metal colloid solution according to any one of claims 25 to 29, wherein the at least one amine or salt thereof is a simple amine, a polyamine, an aromatic amine, a surfactant amine or a functionalised amine.

31. A metal colloid solution according to any one of claims 25 to 30, wherein the at least one amine or salt thereof is selected from the group consisting of:
oleylamine, hexylamine, octylamine, nonylamine, decylamine, dodecylamine, dimethyl dodecylamine tridecylamine, di(allyl)amine, propylamine, ethylamine, triethylamine, nonylamine, octadecylamine, hexadecylamine, polyoxyalkylene amines, 2-hydroxyethyl ethylene diamine, hexamethylene diamine, decyl dipropylene triamine, triethylene tetramine, tetraethylene triamine, tetraethylene pentamine, pentaethylene tetramine, xylylene diamine, 4,4'-methylenebis(2,6-diethylaniline), 4-hexoylaniline, aminoethyl piperazine, 1,4- bis(3-aminopropyl) piperazine, cocoamine, stearylamine, stearamido propyl dimethylamine, tallow amine, tallow propylene diamine, tallow dipropylene triamine, N-oleyl-1,3-diaminopropane, N-(tallow alkyl)-1,3-propane diamine, oleamido propyl dimethylamine, aminodecanoic acids, fatty amino acids, fatty acid hydrazides, tyramine, dimethyl aminopropyl methacrylamide, dimethyl aminoethyl methacrylate, dimethyl aminopropyl acrylamide, 3-(2-aminoethylamino) propyl trimethoxy silane, 3-phenyl propylamine, 2,4,8,10-tetraoxaspiro (5,5) undecane-3,9-dipropanamine, 2-amino-2-methyl-1-propanol, olelyl imidazoline and 2-(2-aminoethylamino)ethanol.

32. A metal colloid solution according to any one of claims 25 to 31, wherein the metal colloid solution absorbs UV-visible light in the wavelength range of from 510 to 540 nm, from 395 to 425 nm or from 555 to 585 nm.

33. A metal colloid solution according to any one of claims 25 to 32, wherein the metal colloid solution remains stable for a period of at least 3 months.

34. A metal colloid solution according to any one of claims 25 to 33, wherein the metal colloid solution comprises from 5% to 70% metal by weight.

35. High metal content stabilised metal nanoparticles, comprising at least one acetylide and at least one amine or salt thereof as stabilisers, and wherein the metal content of the metal nanoparticles is greater than or equal to 65wt%.

36. High metal content stabilised metal nanoparticles according to claim 35, wherein the wherein the metal is selected from the platinum group metals or the coinage metals.

37. High metal content stabilised metal nanoparticles according to claim 35 or claim 36, wherein the metal is selected from silver, gold or copper.

38. High metal content stabilised metal nanoparticles according to any one claims 35 to 37, wherein the at least one acetylide is derived from the group consisting of metal phenylacetylides, metal alkynyl cyclohexanols, metal alkynes and metal alkynols.

39. High metal content stabilised metal nanoparticles according to any one of claims 35 to 38, wherein the at least one amine or salt thereof is a simple amine, a polyamine, an aromatic amine, a surfactant amine or a functionalised amine.

40. High metal content stabilised metal nanoparticles according to any one of claims 35 to 39, wherein the at least one amine or salt thereof is selected from the group consisting of:
oleylamine, hexylamine, octylamine, nonylamine, decylamine, dodecylamine, dimethyl dodecylamine tridecylamine, di(allyl)amine, propylamine, ethylamine, triethylamine, nonylamine, octadecylamine, hexadecylamine, polyoxyalkylene amines, 2-hydroxyethyl ethylene diamine, hexamethylene diamine, decyl dipropylene triamine, triethylene tetramine, tetraethylene triamine, tetraethylene pentamine, pentaethylene tetramine, xylylene diamine, 4,4'-methylenebis(2,6-diethylaniline), 4-hexoylaniline, aminoethyl piperazine, 1,4- bis(3-aminopropyl) piperazine, cocoamine, stearylamine, stearamido propyl dimethylamine, tallow amine, tallow propylene diamine, tallow dipropylene triamine, N-oleyl-1,3-diaminopropane, N-(tallow alkyl)-1,3-propane diamine, oleamido propyl dimethylamine, aminodecanoic acids, fatty amino acids, fatty acid hydrazides, tyramine, dimethyl aminopropyl methacrylamide, dimethyl aminoethyl methacrylate, dimethyl aminopropyl acrylamide, 3-(2-aminoethylamino) propyl trimethoxy silane, 3-phenyl propylamine, 2,4,8,10-tetraoxaspiro (5,5) undecane-3,9-dipropanamine, 2-amino-2-methyl-1-propanol, olelyl imidazoline and 2-(2-aminoethylamino)ethanol.

41. High metal content stabilised metal nanoparticles according to any one of claims 35 to 40, wherein the nanoparticles have a diameter of from 2 to 10 nm.

42. High metal content stabilised metal nanoparticles according to claim 41, wherein the diameter is from 2 to 6 nm.

## Patentansprüche

1. Verfahren zur Herstellung von stabilisierten Metallnanopartikeln mit hohem Metallgehalt, wobei das Verfahren das Reagieren von mindestens einem Metallacetylid mit mindestens einem Amin oder Aminsalz in Gegenwart eines ersten Lösungsmittels unter reduzierenden Bedingungen umfasst, um eine Metallkolloidlösung zu bilden und dann Metallnanopartikel als Niederschlag wiederzugewinnen durch entweder:
(a) Verdampfen des ersten Lösungsmittels; oder
(b) Zusetzen eines zweiten Lösungsmittels zu dem ersten Lösungsmittel,
wobei der Metallgehalt der Metallnanopartikel größer als oder gleich 65 Gew.-% ist.

2. Verfahren zur Herstellung einer Metallkolloidlösung, wobei das Verfahren das Reagieren der Umsetzung von mindestens einem Metallacetylid mit mindestens einem Amin oder Aminsalz in Gegenwart eines Lösungsmittels unter reduzierenden Bedingungen zu der Metallkolloidlösung umfasst.

3. Verfahren nach Anspruch 1 oder Anspruch 2, wobei das mindestens eine Metallacetylid reduziert wird, indem die Reaktion zwischen dem mindestens einen Metallacetylid und dem mindestens einen Amin bei einer Temperatur von 70°C bis 200°C durchgeführt wird.

4. Verfahren nach Anspruch 1 oder Anspruch 2, wobei das mindestens eine Metallacetylid unter Verwendung eines chemischen Reduktionsmittels reduziert wird.

5. Verfahren nach Anspruch 1 oder Anspruch 2, wobei das mindestens eine Metallacetylid durch Einwirkung von elektromagnetischer Strahlung reduziert wird.

6. Verfahren nach irgendeinem der vorangehenden Ansprüche, wobei das mindestens eine Amin ein einfaches Amin, ein Polyamin, ein aromatisches Amin, ein oberflächenaktives Amin oder ein funktionalisiertes Amin ist.

7. Verfahren nach Anspruch 6, wobei das einfache Amin ausgewählt ist aus der Gruppe bestehend aus Oleylamin, Hexylamin, Octylamin, Nonylamin, Decylamin, Dodecylamin, Dimethyldodecylamin, Tridecylamin, Di(allyl)amin, Propylamin, Ethylamin, Triethylamin, Nonylamin, Octadecylamin, Hexadecylamin und Polyoxyalkylenaminen.

8. Verfahren nach Anspruch 6, wobei das Polyamin ausgewählt ist aus der Gruppe bestehend aus 2-Hydroxyethylethylendiamin, Hexamethylendiamin, Decyldipropylentriamin, Triethylentetramin, Tetraethylentriamin, Tetraethylenpentamin und Pentaethylentetramin.

9. Verfahren nach Anspruch 6, wobei das aromatische Amin ausgewählt ist aus der Gruppe bestehend aus Xylylendiamin, 4,4'-Methylen-bis(2,6-diethylanilin), 4-Hexoylanilin, Aminoethylpiperazin und 1,4-Bis(3-aminopropyl)piperazin.

10. Verfahren nach Anspruch 6, wobei das oberflächenaktive Amin ausgewählt ist aus der Gruppe bestehend aus Kokosamin, Stearylamin, Stearamidopropyldimethylamin, Talgamin, Talgpropylendiamin, Talgdipropylentriamin, N-Oleyl-1,3-diaminopropan, N-(Talgalkyl)-1,3-propandiamin, Oleamidopropyldimethylamin, Aminodecansäuren, Aminofettsäuren und Fettsäurehydraziden.

11. Verfahren nach Anspruch 6, wobei das funktionalisierte Amin ausgewählt ist aus der Gruppe bestehend aus Tyramin, Dimethylaminopropylmethacrylamid, Dimethylaminoethylmethacrylat, Dimethylaminopropylacrylamid, 3-(2-Aminoethylamino)propyltrimethoxysilan, 3-Phenylpropylamin, 2,4,8,10-Tetraoxaspiro[5.5]undecan-3,9-dipropanamin, 2-Amino-2-methyl-1-propanol, Olelylimidazolin und 2-(2-Aminoethylamino)ethanol.

12. Verfahren nach irgendeinem der Ansprüche 1 bis 6, wobei das Aminsalz aus den Salzen von irgendeinem der Amine in den Ansprüchen 7 bis 11 ausgewählt ist.

13. Verfahren nach irgendeinem der vorangehenden Ansprüche, wobei das mindestens eine Metall in dem mindestens einen Metallacetylid aus den Platingruppenmetallen oder den Münzmetallen ausgewählt ist.

14. Verfahren nach Anspruch 13, wobei das mindestens eine Metall Silber oder Gold ist und das Verfahren in Luft durchgeführt wird.

15. Verfahren nach Anspruch 13, wobei das mindestens eine Metall Kupfer ist und das Verfahren unter einer inerten Atmosphäre durchgeführt wird.

16. Verfahren nach irgendeinem der vorangehenden Ansprüche, wobei das mindestens eine Metallacetylid ausgewählt ist aus der Gruppe bestehend aus Metallphenylacetyliden, Metallalkinylcyclohexanolen, Metallalkinen oder Metallalkinolen.

17. Verfahren nach irgendeinem der vorangehenden Ansprüche, wobei das in Anspruch 1 definierte erste Lösungsmittel oder das in Anspruch 2 definierte Lösungsmittel ausgewählt ist aus der Gruppe bestehend aus Xylol, Shellsol, Toluol, Mesitylen, Cyclohexanon, Cyclohexanol, Dimethylacetamid und Dimethylformamid.

18. Verfahren nach irgendeinem der Ansprüche 1 oder 3 bis 17, wobei das zweite Lösungsmittel ausgewählt ist aus der Gruppe bestehend aus Methanol, Ethanol, Isopropanol, Aceton, Acetonitril und Hexan.

19. Verfahren nach irgendeinem der vorangehenden Ansprüche, wobei die Metallkolloidlösung UV-/sichtbares Licht im Wellenlängenbereich von 510 bis 540 nm, 395 bis 425 nm oder 555 bis 585 nm absorbiert.

20. Verfahren nach irgendeinem der vorangehenden Ansprüche, wobei die Metallkolloidlösung für einen Zeitraum von mindestens 3 Monaten stabil bleibt.

21. Verfahren nach irgendeinem der vorangehenden Ansprüche, wobei die Metallkolloidlösung zu 5 Gew.-% bis 70 Gew.-% Metall umfasst.

22. Verfahren nach irgendeinem der Ansprüche 1 oder 3 bis 21, wobei die Nanopartikel einen Durchmesser von 2 bis 10 nm aufweisen.

23. Verfahren nach Anspruch 22, wobei der Durchmesser 2 bis 6 nm beträgt.

24. Verfahren nach irgendeinem der vorangehenden Ansprüche, wobei das Verfahren keine Schwefel-Vorläufer oder halogenidhaltige Vorläufer verwendet.

25. Metallkolloidlösung umfassend mindestens ein Acetylid und mindestens ein Amin oder Salz davon als Stabilisatoren.

26. Metallkolloidlösung nach Anspruch 25, wobei das Metall aus den Platingruppenmetallen oder den Münzmetallen ausgewählt ist.

27. Metallkolloidlösung nach Anspruch 25 oder Anspruch 26, wobei das Metall aus Silber, Gold oder Kupfer ausgewählt ist.

28. Metallkolloidlösung nach irgendeinem der Ansprüche 25 bis 27, wobei die Lösung ausgewählt ist aus der Gruppe bestehend aus Xylol, Shellsol, Toluol, Mesitylen, Cyclohexanon, Cyclohexanol, Dimethylacetamid und Dimethylformamid.

29. Metallkolloidlösung nach irgendeinem der Ansprüche 25 bis 28, wobei das mindestens eine Acetylid abgeleitet ist aus der Gruppe bestehend aus Metallphenylacetyliden, Metallalkinylcyclohexanolen, Metallalkinen und Metallalkinolen.

30. Metallkolloidlösung nach irgendeinem der Ansprüche 25 bis 29, wobei das mindestens eine Amin oder Salz davon ein einfaches Amin, ein Polyamin, ein aromatisches Amin, ein oberflächenaktives Amin oder ein funktionalisiertes Amin ist.

31. Metallkolloidlösung nach irgendeinem der Ansprüche 25 bis 30, wobei das mindestens eine Amin oder Salz davon ausgewählt ist aus der Gruppe bestehend aus:
Oleylamin, Hexylamin, Octylamin, Nonylamin, Decylamin, Dodecylamin, Dimethyldodecylamin, Tridecylamin, Di(allyl)amin, Propylamin, Ethylamin, Triethylamin, Nonylamin, Octadecylamin, Hexadecylamin, Polyoxyalkylenaminen, 2-Hydroxyethylethylendiamin, Hexamethylendiamin, Decyldipropylentriamin, Triethylentetramin, Tetraethylentriamin, Tetraethylenpentamin, Pentaethylentetramin, Xylylendiamin, 4,4'-Methylen-bis(2,6-diethylanilin), 4-Hexoylanilin, Aminoethylpiperazin, 1,4-Bis(3-aminopropyl)piperazin, Kokosamin, Stearylamin, Stearamidopropyldimethylamin, Talgamin, Talgpropylendiamin, Talgdipropylentriamin, N-Oleyl-1,3-diaminopropan, N-(Talgalkyl)-1,3-propandiamin, Oleamidopropyldimethylamin, Aminodecansäuren, Aminofettsäuren, Fettsäurehydraziden, Tyramin, Dimethylaminopropylmethacrylamid, Dimethylaminoethylmethacrylat, Dimethylaminopropylacrylamid, 3-(2-Aminoethylamino)propyltrimethoxysilan, 3-Phenylpropylamin, 2,4,8,10-Tetraoxaspiro[5.5]undecan-3,9-dipropanamin, 2-Amino-2-methyl-1-propanol, Olelylimidazolin und 2-(2-Aminoethylamino)ethanol.

32. Metallkolloidlösung nach irgendeinem der Ansprüche 25 bis 31, wobei die Metallkolloidlösung UV-/sichtbares Licht im Wellenlängenbereich von 510 bis 540 nm, 395 bis 425 nm oder 555 bis 585 nm absorbiert.

33. Metallkolloidlösung nach irgendeinem der Ansprüche 25 bis 32, wobei die Metallkolloidlösung für einen Zeitraum von mindestens 3 Monaten stabil bleibt.

34. Metallkolloidlösung nach irgendeinem der Ansprüche 25 bis 33, wobei die Metallkolloidlösung zu 5 Gew.-% bis 70 Gew.-% Metall umfasst.

35. Stabilisierte Metallnanopartikel mit hohem Metallgehalt, umfassend mindestens ein Acetylid und mindestens ein Amin oder Salz davon als Stabilisatoren, und wobei der Metallgehalt der Metallnanopartikel größer als oder gleich 65 Gew.-% ist.

36. Stabilisierte Metallnanopartikel mit hohem Metallgehalt nach Anspruch 35, wobei das Metall aus den Platingruppenmetallen oder den Münzmetallen ausgewählt ist.

37. Stabilisierte Metallnanopartikel mit hohem Metallgehalt nach Anspruch 35 oder Anspruch 36, wobei das Metall aus Silber, Gold oder Kupfer ausgewählt ist.

38. Stabilisierte Metallnanopartikel mit hohem Metallgehalt nach irgendeinem der Ansprüche 35 bis 37, wobei das mindestens eine Acetylid abgeleitet ist aus der Gruppe bestehend aus Metallphenylacetyliden, Metallalkinylcyclohexanolen, Metallalkinen und Metallalkinolen.

39. Stabilisierte Metallnanopartikel mit hohem Metallgehalt nach irgendeinem der Ansprüche 35 bis 38, wobei das mindestens eine Amin oder Salz davon ein einfaches Amin, ein Polyamin, ein aromatisches Amin, ein oberflächenaktives Amin oder ein funktionalisiertes Amin ist.

40. Stabilisierte Metallnanopartikel mit hohem Metallgehalt nach irgendeinem der Ansprüche 35 bis 39, wobei das mindestens eine Amin oder Salz davon ausgewählt ist aus der Gruppe bestehend aus:
Oleylamin, Hexylamin, Octylamin, Nonylamin, Decylamin, Dodecylamin, Dimethyldodecylamin, Tridecylamin, Di(allyl)amin, Propylamin, Ethylamin, Triethylamin, Nonylamin, Octadecylamin, Hexadecylamin, Polyoxyalkylenaminen, 2-Hydroxyethylethylendiamin, Hexamethylendiamin, Decyldipropylentriamin, Triethylentetramin, Tetraethylentriamin, Tetraethylenpentamin, Pentaethylentetramin, Xylylendiamin, 4,4'-Methylen-bis(2,6-diethylanilin), 4-Hexoylanilin, Aminoethylpiperazin, 1,4-Bis(3-aminopropyl)piperazin, Kokosamin, Stearylamin, Stearamidopropyldimethylamin, Talgamin, Talgpropylendiamin, Talgdipropylentriamin, N-Oleyl-1,3-diaminopropan, N-(Talgalkyl)-1,3-propandiamin, Oleamidopropyldimethylamin, Aminodecansäuren, Aminofettsäuren, Fettsäurehydraziden, Tyramin, Dimethylaminopropylmethacrylamid, Dimethylaminoethylmethacrylat, Dimethylaminopropylacrylamid, 3-(2-Aminoethylamino)propyltrimethoxysilan, 3-Phenylpropylamin, 2,4,8,10-Tetraoxaspiro[5.5]undecan-3,9-dipropanamin, 2-Amino-2-methyl-1-propanol, Olelylimidazolin und 2-(2-Aminoethylamino)ethanol.

41. Stabilisierte Metallnanopartikel mit hohem Metallgehalt nach irgendeinem der Ansprüche 35 bis 40, wobei die Nanopartikel einen Durchmesser von 2 bis 10 nm aufweisen.

42. Stabilisierte Metallnanopartikel mit hohem Metallgehalt nach Anspruch 41, wobei der Durchmesser 2 bis 6 nm beträgt.

## Revendications

1. Procédé de fabrication de nanoparticules métalliques stabilisées à teneur élevée en métal, lequel procédé comprend la réaction d'au moins un acétylure métallique avec au moins une amine ou un sel d'amine en la présence d'un premier solvant sous des conditions réductrices pour produire une solution colloïdale métallique et ensuite la récupération des nanoparticules métalliques sous la forme d'un précipité soit :
(a) par évaporation du premier solvant ; soit
(b) par l'addition d'un second solvant au premier solvant,
dans lequel la teneur en métal des nanoparticules métalliques est supérieure ou égale à 65 % en poids.

2. Procédé de fabrication d'une solution colloïdale métallique, lequel procédé comprend la réaction d'au moins un acétylure métallique avec au moins une amine ou un sel d'amine en la présence d'un solvant sous des conditions réductrices pour produire la solution colloïdale métallique.

3. Procédé selon la revendication 1 ou la revendication 2, dans lequel le au moins un acétylure métallique est réduit en conduisant la réaction entre le au moins un acétylure métallique et la au moins une amine à une température allant de 70°C à 200°C.

4. Procédé selon la revendication 1 ou la revendication 2, dans lequel le au moins un acétylure métallique est réduit en utilisant un agent chimique réducteur.

5. Procédé selon la revendication 1 ou la revendication 2, dans lequel le au moins un acétylure métallique est réduit par l'exposition à une irradiation électromagnétique.

6. Procédé selon l'une quelconque des revendications précédentes, dans lequel la au moins une amine est une amine simple, une polyamine, une amine aromatique, une amine tensioactive ou une amine fonctionnalisée.

7. Procédé selon la revendication 6, dans lequel l'amine simple est choisie parmi le groupe constitué de l'oleylamine, de l'hexylamine, de l'octylamine, de la nonylamine, de la décylamine, de la dodécylamine, de la diméthyl dodécylamine ; de la tridécylamine, de la di(allyl)amine, de la propylamine, de l'éthylamine, de la triéthylamine, de la nonylamine, de l'octadécylamine, de l'hexadécylamine et des polyoxyalkylène amines.

8. Procédé selon la revendication 6, dans lequel la polyamine est choisie parmi le groupe constitué de la 2-hydroxyéthyl éthylène diamine, de l'hexaméthylène diamine, de la décyl dipropylène triamine, de la triéthylène tétramine, de la tétraéthylène triamine, de la tétraéthylène pentamine et de la pentaéthylène tétramine.

9. Procédé selon la revendication 6, dans lequel l'amine aromatique est choisie parmi le groupe constitué de la xylylène diamine, de la 4,4'-méthylène bis(2,6-diéthylaniline), de la 4-hexoylaniline, de l'aminoéthyl pipérazine et de la 1,4-bis(3-aminopropyl) pipérazine.

10. Procédé selon la revendication 6, dans lequel l'amine tensioactive est choisie parmi le groupe constitué de la cocoamine, de la stéarylamine, de la stéaramido propyl diméthylamine, de l'amine de suif, de la propylène diamine de suif, de la dipropylène triamine de suif, du N-oleyl-1,3-diaminopropane, de la N-(alkyle de suif)-1,3-propane diamine, de l'oleamido propyl diméthylamine, des acides aminodécanoïques, des acides gras aminés et des hydrazides d'acide gras.

11. Procédé selon la revendication 6, dans lequel l'amine fonctionnalisée est choisie parmi le groupe constitué de la tyramine, du diméthyl aminopropyl méthacrylamide, du méthacrylate de diméthyl aminoéthyle, du diméthyl aminopropyl acrylamide, du 3-(2-aminoéthylamino) propyl triméthoxy silane, de la 3-phényl propylamine, de la 2,4,8,10-tétraoxaspiro(5,5)undécane-3,9-dipropanamine, du 2-amino-2-méthyl-1-propanol, de l'olelyl imidazoline et du 2-(2-aminoéthylamino)éthanol.

12. Procédé selon l'une quelconque des revendications 1 à 6, dans lequel le sel d'amine est choisi parmi les sels de l'une quelconque des amines selon les revendications 7 à 11.

13. Procédé selon l'une quelconque des revendications précédentes, dans lequel le au moins un métal dans le au moins un acétylure métallique est choisi parmi les métaux du groupe du platine ou les métaux monétaires.

14. Procédé selon la revendication 13, dans lequel le au moins un métal est l'argent ou l'or et le procédé est conduit dans l'air.

15. Procédé selon la revendication 13, dans lequel le au moins un métal est le cuivre et le procédé est conduit sous une atmosphère inerte.

16. Procédé selon l'une quelconque des revendications précédentes, dans lequel le au moins un acétylure métallique est choisi parmi le groupe constitué des phénylacétylures métalliques, des alcynyl cyclohexanols métalliques, des alcynes métalliques ou des alcynols métalliques.

17. Procédé selon l'une quelconque des revendications précédentes, dans lequel le premier solvant tel que défini dans la revendication 1 ou le solvant tel que défini dans la revendication 2 est choisi parmi le groupe constitué du xylène, du Shellsol, du toluène, du mésitylène, de la cyclohexanone, du cyclohexanol, du diméthylacétamide et du diméthylformamide.

18. Procédé selon l'une quelconque des revendications 1 ou 3 à 17, dans lequel le second solvant est choisi parmi le groupe constitué du méthanol, de l'éthanol, de l'iso-propanol, de l'acétone, de l'acétonitrile et de l'hexane.

19. Procédé selon l'une quelconque des revendications précédentes, dans lequel la solution colloïdale métallique absorbe la lumière UV-visible dans la plage de longueurs d'onde allant de 510 à 540 nm, de 395 à 425 nm ou de 555 à 585 nm.

20. Procédé selon l'une quelconque des revendications précédentes, dans lequel la solution colloïdale métallique demeure stable sur une durée d'au moins 3 mois.

21. Procédé selon l'une quelconque des revendications précédentes, dans lequel la solution colloïdale métallique comprend de 5 % à 70 % de métal en poids.

22. Procédé selon l'une quelconque des revendications 1 ou 3 à 21, dans lequel les nanoparticules ont un diamètre de 2 à 10 nm.

23. Procédé selon la revendication 22, dans lequel le diamètre est de 2 à 6 nm.

24. Procédé selon l'une quelconque des revendications précédentes, dans lequel le procédé n'utilise pas de précurseurs du soufre ni de précurseurs contenant un halogénure.

25. Solution colloïdale métallique comprenant au moins un acétylure et au moins une amine ou un sel de celle-ci comme agents stabilisants.

26. Solution colloïdale métallique selon la revendication 25, dans laquelle le métal est choisi parmi les métaux du groupe du platine ou les métaux monétaires.

27. Solution colloïdale métallique selon la revendication 25 ou la revendication 26, dans laquelle le métal est choisi parmi l'argent, l'or ou le cuivre.

28. Solution colloïdale métallique selon l'une quelconque des revendications 25 à 27, dans laquelle la solution est choisie parmi le groupe constitué du xylène, du Shellsol, du toluène, du mésitylène, de la cyclohexanone, du cyclohexanol, du diméthylacétamide et du diméthylformamide.

29. Solution colloïdale métallique selon l'une quelconque des revendications 25 à 28, dans laquelle le au moins un acétylure est dérivé du groupe constitué des phénylacétylures métalliques, des alcynyl cyclohexanols métalliques, des alcynes métalliques et des alcynols métalliques.

30. Solution colloïdale métallique selon l'une quelconque des revendications 25 à 29, dans laquelle la au moins une amine ou sel de celle-ci est une amine simple, une polyamine, une amine aromatique, une amine tensioactive ou une amine fonctionnalisée.

31. Solution colloïdale métallique selon l'une quelconque des revendications 25 à 30, dans laquelle la au moins une amine ou un sel de celle-ci est choisi(e) parmi le groupe constitué de : l'oleylamine, l'hexylamine, l'octylamine, la nonylamine, la décylamine, la dodécylamine, la diméthyl dodécylamine, la tridécylamine, la di(allyl)amine, la propylamine, l'éthylamine, la triéthylamine, la nonylamine, l'octadécylamine, l'hexadécylamine, les polyoxyalkylène amines, la 2-hydroxyéthyl éthylène diamine, l'hexaméthylène diamine, la décyl dipropylène triamine, la triéthylène tétramine, la tétraéthylène triamine, la tétraéthylène pentamine, la pentaéthylène tétramine, la xylylène diamine, la 4,4'-méthylènebis(2,6-diéthylaniline), la 4-hexoylaniline, l'aminoéthyl pipérazine, la 1,4-bis(3-aminopropyl) pipérazine, la cocoamine, la stéarylamine, la stéaramido propyl diméthylamine, l'amine de suif, la propylène diamine de suif, la dipropylène triamine de suif, le N-oleyl-1,3-diaminopropane, la N-(alkyle de suif)-1,3-propane diamine, l'oleamido propyl diméthylamine, les acides aminodécanoïques, les acides gras aminés, les hydrazides d'acide gras, la tyramine, le diméthyl aminopropyl méthacrylamide, le méthacrylate de diméthyl aminoéthyle, le diméthyl aminopropyl acrylamide, le 3-(2-aminoéthylamino) propyl triméthoxy silane, la 3-phényl propylamine, la 2,4,8,10-tétraoxaspiro(5,5)undécane-3,9-dipropanamine, le 2-amino-2-méthyl-1-propanol, la olelyl imidazoline et le 2-(2-aminoéthylamino)éthanol.

32. Solution colloïdale métallique selon l'une quelconque des revendications 25 à 31, dans laquelle la solution colloïdale métallique absorbe la lumière UV-visible dans la plage de longueurs d'onde de 510 à 540 nm, de 395 à 425 nm ou de 555 à 585 nm.

33. Solution colloïdale métallique selon l'une quelconque des revendications 25 à 32, dans laquelle la solution colloïdale métallique demeure stable sur une durée d'au moins 3 mois.

34. Solution colloïdale métallique selon l'une quelconque des revendications 25 à 33, dans laquelle la solution colloïdale métallique comprend de 5 % à 70 % de métal en poids.

35. Nanoparticules métalliques stabilisées à teneur élevée en métal, comprenant au moins un acétylure et au moins une amine ou un sel de celle-ci comme agents stabilisants, et dans lesquelles la teneur en métal des nanoparticules métalliques est supérieure ou égale à 65 % en pds.

36. Nanoparticules métalliques stabilisées à teneur élevée en métal selon la revendication 35, dans lesquelles le métal est choisi parmi les métaux du groupe du platine ou les métaux monétaires.

37. Nanoparticules métalliques stabilisées à teneur élevée en métal selon la revendication 35 ou la revendication 36, dans lesquelles le métal est choisi parmi l'argent, l'or ou le cuivre.

38. Nanoparticules métalliques stabilisées à teneur élevée en métal selon l'une quelconque des revendications 35 à 37, dans lesquelles le au moins un acétylure est dérivé du groupe constitué des phénylacétylures métalliques, des alcynyl cyclohexanols métalliques, des alcynes métalliques et des alcynols métalliques.

39. Nanoparticules métalliques stabilisées à teneur élevée en métal selon l'une quelconque des revendications 35 à 38, dans lesquelles la au moins une amine ou un sel de celle-ci est une amine simple, une polyamine, une amine aromatique, une amine tensioactive ou une amine fonctionnalisée.

40. Nanoparticules métalliques stabilisées à teneur élevée en métal selon l'une quelconque des revendications 35 à 39, dans lesquelles la au moins une amine ou un sel de celle-ci est choisi(e) parmi le groupe constitué de :
l'oleylamine, l'hexylamine, l'octylamine, la nonylamine, la décylamine, la dodécylamine, la diméthyl dodécylamine, la tridécylamine, la di(allyl)amine, la propylamine, l'éthylamine, la triéthylamine, la nonylamine, l'octadécylamine, l'hexadécylamine, les polyoxyalkylène amines, la 2-hydroxyéthyl éthylène diamine, l'hexaméthylène diamine, la décyl dipropylène triamine, la triéthylène tétramine, la tétraéthylène triamine, la tétraéthylène pentamine, la pentaéthylène tétramine, la xylylène diamine, la 4,4'-méthylènebis(2,6-diéthylaniline), la 4-hexoylaniline, l'aminoéthyl pipérazine, la 1,4-bis(3-aminopropyl) pipérazine, la cocoamine, la stéarylamine, la stéaramido propyl diméthylamine, l'amine de suif, la propylène diamine de suif, la dipropylène triamine de suif, le N-oleyl-1,3-diaminopropane, la N-(alkyle de suif)-1,3-propane diamine, l'oleamido propyl diméthylamine, les acides aminodécanoïques, les acides gras aminés, les hydrazides d'acide gras, la tyramine, le diméthyl aminopropyl méthacrylamide, le méthacrylate de diméthyl aminoéthyle, le diméthyl aminopropyl acrylamide, le 3-(2-aminoéthylamino) propyl triméthoxy silane, la 3-phényl propylamine, la 2,4,8,10-tétraoxaspiro(5,5)undécane-3,9-dipropanamine, le 2-amino-2-méthyl-1-propanol, la olelyl imidazoline et le 2-(2-aminoéthylamino)éthanol.

41. Nanoparticules métalliques stabilisées à teneur élevée en métal selon l'une quelconque des revendications 35 à 40, dans lesquelles les nanoparticules ont un diamètre de 2 à 10 nm.

42. Nanoparticules métalliques stabilisées à teneur élevée en métal selon la revendication 41, dont le diamètre est de 2 à 6 nm.
